# EUROPÄISCHE PATENTSCHRIFT

(11) **EP 0 406 647 B1**
(45) Veröffentlichungstag und Bekanntmachung des Hinweises auf die Patenterteilung: **23.11.1994**
(21) Anmeldenummer: 90111934.7
(22) Anmeldetag: 23.06.1990
(51) Int. Cl.: A47B 88/10, F16C 29/04

(54) **Unterflurvollauszugführung**
Flush-mounted guiding system
Dispositif de guidage encastré

(30) Priorität: 04.07.1989 DE 3921859
(43) Veröffentlichungstag der Anmeldung: 09.01.1991
(73) Patentinhaber: Schock Metallwerk GmbH, D-73660 Urbach (DE)
(72) Erfinder: Wied, Arno, D-7053 Kernen (DE)
(74) Vertreter: Hoeger, Stellrecht & Partner

(56) Entgegenhaltungen:
- EP-A- 0 226 389
- DE-U- 8 130 557
- GB-A- 2 061 705
- US-A- 3 451 730

## Beschreibung

Die Erfindung betrifft eine Unterflurvollauszugführung für aus einem Korpus ausziehbare Auszüge, umfassend eine an dem Korpus befestigbare stationäre Grundschiene, eine die Grundschiene im wesentlichen als C-Profil umgreifende Mittelschiene, die an der Grundschiene mittels mindestens zwei in einer senkrecht zur Ausziehrichtung und senkrecht zur Abstützrichtung verlaufenden Querrichtung im Abstand voneinander angeordneten ersten Längsführungen verschieblich geführt ist, wobei letztere auf ersten Bahnen laufende erste Lagerkörper aufweisen, und eine am Auszug befestigbare, die Mittelschiene im wesentlichen als C-Profil umgreifende Endschiene, welche an der Mittelschiene durch mindestens zwei in Querrichtung im Abstand voneinander angeordnete zweite Längsführungen verschieblich geführt ist, wobei letztere auf zweiten Bahnen laufende zweite Lagerkörper aufweisen.

Derartige Unterflurvollauszugführungen sind aus dem Stand der Technik bekannt. Bei diesen ist die Mittelschiene mit insgesamt vier auf jeweils ersten Bahnen an der Grundschiene und der Mittelschiene sich abwälzenden Kugelbahnführungen geführt. Die die Mittelschiene als C-Profil umgreifende Endschiene ist jedoch mittels auf gegenüberliegenden Seiten der Mittelschiene an dieser drehbar gehaltenen Rollen geführt, wobei mindestens zwei Sätze gegenüberliegender Rollen in Ausziehrichtung im Abstand voneinander vorgesehen sein müssen. Jede dieser drehbar an der Mittelschiene gelagerten Rollen läuft ihrerseits entweder auf einer oberen oder unteren zweiten Bahn an der Endschiene. Der Nachteil dieser Lösung ist darin zu sehen, daß durch die Rollen keine exakte Führung der Endschiene an der Mittelschiene, insbesondere auch keine exakte Seitenführung,möglich ist und daß die Befestigung der Rollen fertigungstechnisch aufwendig ist.

Der Erfindung liegt daher die Aufgabe zugrunde, eine Unterflurvollauszugführung der gattungsgemäßen Art derart zu verbessern, daß diese möglichst niedrig baut, eine möglichst exakte Führung der Endschiene erlaubt und außerdem möglichst kostengünstig herzustellen ist.

Diese Aufgabe wird bei einer Unterflurvollauszugführung der eingangs beschriebenen Art erfindungsgemäß dadurch gelöst, daß die zweiten Längsführungen als zweite Lagerkörper frei laufende Wälzkörper aufweisen, die sich auf an einer Außenseite des C-Profils der Mittelschiene vorgesehenen zweiten Bahnen und an einer Innenseite des C-Profils der Endschiene vorgesehenen zweiten Bahnen abwälzen, daß die im Abstand voneinander angeordneten zweiten Längsführungen untere Längsführungen bilden und daß in Abstützrichtung der Auszugführung über diesen unteren Längsführungen mindestens eine obere zweite Längsführung vorgesehen ist.

Der Vorteil der erfindungsgemäßen Lösung ist darin zu sehen, daß durch die Ausbildung der zweiten Längsführungen als Wälzkörperführungen und die Anordnung der zweiten Bahnen an der Außenseite des C-Profils der Mittelschiene eine kompakte Lösung geschaffen wurde, die einerseits niedrig baut und andererseits einfach und kostengünstig herzustellen ist.

Rein prinzipiell könnte im Rahmen der erfindungsgemäßen Lösung das C-Profil der Mittelschiene ein gezogenes Profil, beispielsweise aus Aluminium, sein. Aus Kostengründen ist es jedoch besonders zweckmäßig, wenn das C-Profil der Mittelschiene aus Material mit im wesentlichen konstanter Dicke gewalzt ist.

Um die Abmessungen der erfindungsgemäßen Vollauszugführung möglichst gering zu halten, hat es sich als besonders zweckmäßig erwiesen, wenn die Mittelschiene zumindest in einem die ersten und zweiten Bahnen tragenden Bereich wellenartig aufeinanderfolgende, entgegengesetzt gekrümmte Durchbiegungen aufweist und die ersten und zweiten Bahnen jeweils in einer Durchbiegung liegen. Damit wird eine optimale kompakte Anordnung der auf den ersten und zweiten Bahnen laufenden Wälzkörper nebeneinander erreicht. Besonders zweckmäßig ist es hierbei, wenn die ersten Bahnen und die zweiten Bahnen in aufeinanderfolgenden Durchbiegungen liegen.

Um eine möglichst hohe Stabilität der erfindungsgemäßen Vollauszugführung und somit eine hohe Belastung des Auszugs erreichen zu können, hat es sich als zweckmäßig erwiesen, wenn die zweiten Bahnen symmetrisch zu einer zur Abstützrichtung parallelen Mittelebene der Grundschiene liegen.

Dem gleichen Zweck dient auch eine vorteilhafte Ausführungsform der vorliegenden Vollauszugführung, bei welcher die ersten Bahnen symmetrisch zu einer zur Abstützrichtung parallelen Mittelebene der Grundschiene liegen.

Grundsätzlich könnten die ersten Längsführungen auch Rollenführungen sein. Besonders vorteilhaft ist es jedoch, wenn auch die ersten Längsführungen sich auf den ersten Bahnen abwälzende Wälzkörper aufweisen.

Bezüglich der Anordnung der ersten Längsführungen sind alle möglichen Konfigurationen denkbar. Eine hinsichtlich der Seitenstabilität und Verwindungssteifheit vorteilhafte Ausführung sieht vor, daß die ersten Längsführungen an Eckpunkten eines senkrecht zur Ausziehrichtung stehenden Rechtecks angeordnet sind.

Alternativ dazu ist es aber auch vorteilhafterweise denkbar, wenn die ersten Längsführungen an Eckpunkten eines senkrecht zur Ausziehrichtung stehenden Dreiecks angeordnet sind.

In gleicher Weise sind unterschiedliche Konfigurationen bei der Anordnung der zweiten Längsführungen denkbar. So sieht eine bevorzugte Ausführungsform vor, daß die zweiten Längsführungen an den Eckpunkten eines senkrecht zur Ausziehrichtung stehenden Rechtecks angeordnet sind.

Eine Alternative Ausführung sieht vor, daß die zweiten Längsführungen an Eckpunkten eines senkrecht zur Ausziehrichtung stehenden Dreiecks angeordnet sind.

Eine bevorzugte Ausführungsform im Rahmen der erfindungsgemäßen Lösung sieht vor, daß entweder die ersten Längsführungen an den Eckpunkten eines Dreiecks und die zweiten Längsführungen an den Eckpunkten eines Rechtecks angeordnet sind und umgekehrt, so daß sich bei dieser Konstellation die ersten und die zweiten Längsführungen relativ zueinander in kompaktester Form anordnen lassen.

Hinsichtlich der Ausbildung der Mittelschiene wurden bislang keine näheren Ausführungen gemacht. So hat es sich insbesondere als vorteilhaft erwiesen, wenn die Mittelschiene einen oberen, in Querrichtung verlaufenden Mittelschenkel, zwei in Abstützrichtung verlaufende Seitenschenkel und zwei im Anschluß an die Seitenschenkel aufeinanderzu eingezogene Endschenkel aufweist.

Ergänzend dazu ist es zweckmäßig, wenn die zweiten Bahnen an dem Mittelschenkel und an dem Endschenkel angeordnet sind, da sich hierbei sehr kompakte Bauweisen erreichen lassen.

Eine besonders kompakte, insbesondere in Querrichtung eine geringe Ausdehnung aufweisende Version sieht dabei vor, daß die Endschenkel in ungefähr parallel zu den Seitenschenkeln ausgerichteten Bereichen auslaufen.

Ferner wird eine in Querrichtung kompakte Bauweise dadurch begünstigt, daß die obere zweite Längsführung oberhalb der ersten Längsführungen und die unteren zweiten Längsführungen unterhalb der ersten Längsführungen angeordnet sind.

Diese Lösung läßt sich zweckmäßigerweise noch weiter dadurch verbessern, daß die auf der Mittelschiene liegenden zweiten Bahnen in Querrichtung innerhalb einer maximalen Erstreckung der Mittelschiene liegen.

Ein besonders bevorzugtes Ausführungsbeispiel ist so konzipiert, daß die auf der Mittelschiene liegenden zweiten Bahnen von einer zur Ausziehrichtung und Abstützrichtung parallel verlaufenden Mittelebene zwischen den ersten Längsführungen maximal in einem Abstand angeordnet sind, welcher dem Maximalabstand der auf der Mittelebene liegenden ersten Bahnen von dieser Mittelebene entspricht.

Ergänzend dazu ist es noch vorteilhafter, wenn die auf der Mittelschiene liegenden zweiten Bahnen in Querrichtung innerhalb der auf der Mittelschiene liegenden ersten Bahnen angeordnet sind.

Insbesondere dann, wenn im Rahmen der erfindungsgemäßen Lösung eine möglichst niedrige Bauweise erreicht werden soll, ist vorgesehen, daß die zweiten Bahnen an den seitlichen Schenkeln angeordnet sind.

Hierbei läßt sich eine besonders kostengünstige Bauweise der erfindungsgemäßen Vollauszugführung dadurch erreichen, daß die zweiten Bahnen an einer seitlichen, von der Grundschiene wegweisenden Ausbiegung der Seitenschenkel angeordnet sind.

Die niedrigste Bauweise ist dadurch erreichbar, daß die zweiten Bahnen in Abstützrichtung im wesentlichen auf derselben Höhe wie die ersten Bahnen liegen.

Bei den bislang beschriebenen Ausführungsbeispielen wurde nicht näher darauf eingegangen, wie die Auszugführung vorzugsweise an dem Korpus befestigbar ist. Bei einem bevorzugten Ausführungsbeispiel ist dabei vorgesehen, daß die Grundschiene einen parallel zur Abstützrichtung verlaufenden Tragsteg aufweist, welcher mit einem Haltewinkel verbunden ist, so daß der Haltewinkel dann seinerseits mit dem Korpus verbindbar, vorzugsweise an diesen anschraubbar ist.

Beim Vorsehen eines Tragstegs hat es sich als besonders zweckmäßig erwiesen, wenn die unteren zweiten Längsführungen den Tragsteg zwischen sich einschließen.

Bei den bislang beschriebenen Ausführungsbeispielen wurden auch hinsichtlich der Ausbildung der Wälzkörper keine näheren Angaben gemacht. So ist es vorteilhaft, wenn mindestens die Wälzkörper der im Abstand voneinander angeordneten unteren zweiten Längsführungen Kugeln sind, da diese eine möglichst kleinvolumig bauende Längsführung zulassen. Jedoch ist es auch alternativ dazu durchaus denkbar, die Wälzkörper der unteren zweiten Längsführungen als Walzen auszuführen.

Insbesondere bei schwer belastbaren Auszugführungen hat es sich als vorteilhaft erwiesen, wenn die Wälzkörper der oberen zweiten Längsführung Walzen sind, wobei aber auch alternativ als Wälzkörper für die oberen zweiten Längsführungen Kugeln in Frage kommen.

Als Wälzkörper für die ersten Längsführungen kommen ebenfalls Kugeln oder Walzen in Frage.

Ein besonders bevorzugtes Ausführungsbeispiel sieht dann, wenn die ersten oder zweiten Längsführungen an den Eckpunkten eines Dreiecks angeordnet sind, vor, daß die obere Längsführung als Wälzkörper Walzen aufweist und die untere Längsführungen als Wälzkörper Kugeln, insbesondere wenn eine kompakte Bauweise erreicht werden soll, während dann, wenn die ersten oder zweiten Längsführungen an den Eckpunkten eines Rechtecks angeordnet werden, Kugeln bevorzugt sind.

Bei einem weiteren Ausführungsbeispiel der erfindungsgemäßen Lösung ist vorgesehen, daß zwischen der Endschiene und der Grundschiene eine Synchronrolle verläuft, welche im wesentlichen in Ausziehrichtung unverschieblich an der Mittelschiene gelagert ist. Eine derartige Synchronrolle verhindert den sogenannten "Mittenschlag" beim Ausziehen einer derartigen Vollauszugführung.

Besonders einfach läßt sich die Synchronrolle dann anordnen, wenn sie eine Ausnehmung der Mittelschiene durchgreift.

Bezüglich der in Ausziehrichtung unverschieblichen Lagerung der Synchronrolle an der Mittelschiene sind mehrere Möglichkeiten denkbar. So ist es denkbar, daß die Synchronrolle in einer Ausnehmung der Mittelschiene gelagert ist und somit durch Anstoßen gegen die quer zur Ausziehrichtung verlaufenden Ränder der Ausnehmung die Mittelschiene mitnimmt.

Alternativ dazu ist es besonders vorteilhaft, wenn die Synchronrolle um eine an der Mittelschiene festgelegte Achse drehbar gelagert ist und somit über diese Achse die Mittelschiene entsprechend ihrer Bewegung mitnimmt.

Bei allen bislang beschriebenen Ausführungsbeispielen von Vollauszugführungen ist die erfindungsgemäße Lösung besonders dann vorteilhaft, wenn die Auszugführung mit Überauszug aus dem Korpus ausziehbar ist.

Weitere Merkmale und Vorteile der Erfindung ergeben sich aus der nachfolgenden Beschreibung sowie der zeichnerischen Darstellung einiger Ausführungsbeispiele. In der Zeichnung zeigen:
- Fig. 1: einen Schnitt durch ein erstes Ausführungsbeispiel einer erfindungsgemäßen Unterflurvollauszugführung;
- Fig. 2: einen Schnitt ähnlich Fig. 1 durch ein zweites Ausführungsbeispiel;

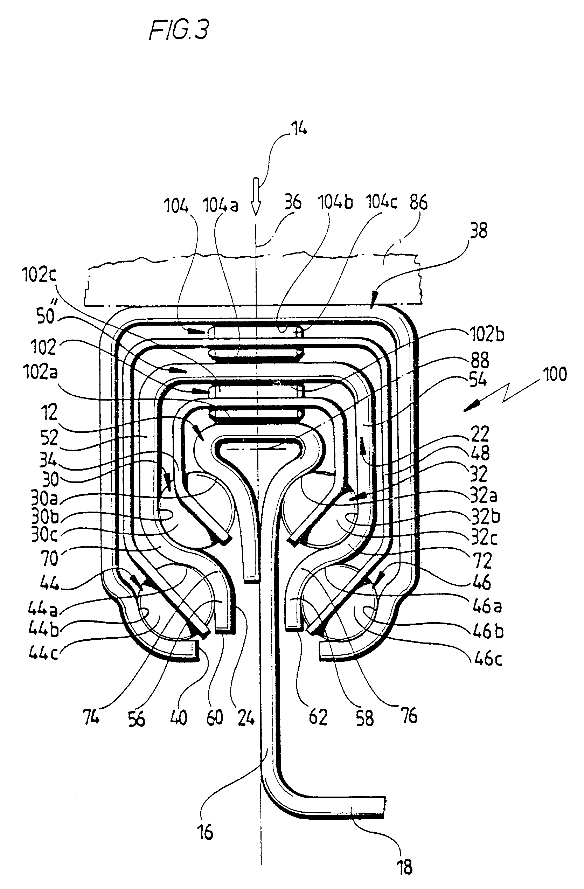

- Fig. 3: einen Schnitt ähnlich Fig. 1 durch ein drittes Ausführungsbeispiel;

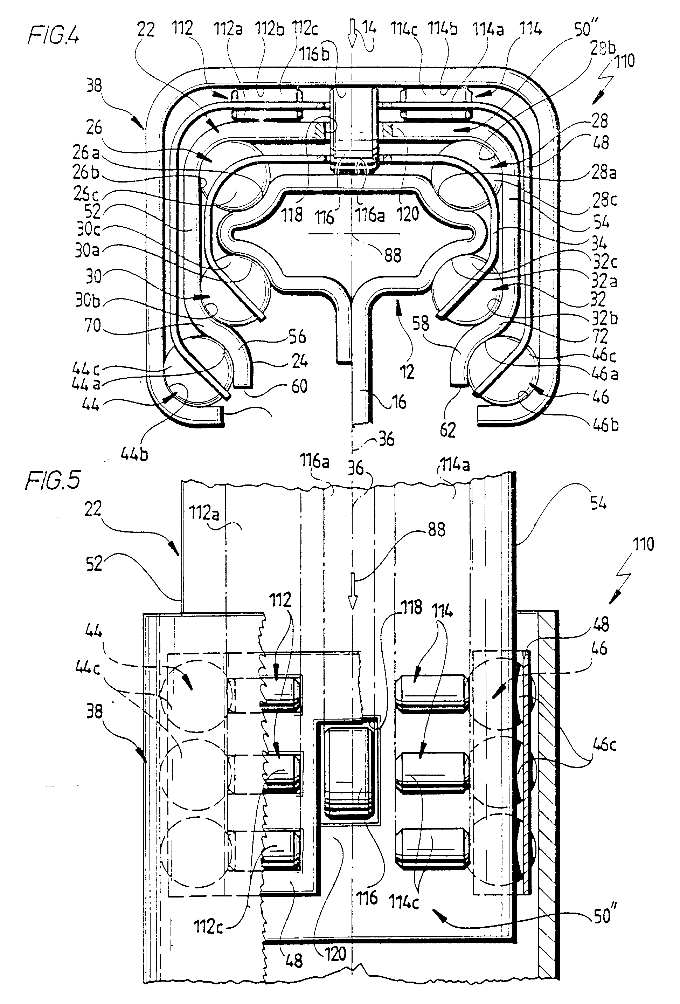

- Fig. 4: einen Schnitt ähnlich Fig. 1 durch ein viertes Ausführungsbeispiel;
- Fig. 5: eine Draufsicht auf einen mittleren Bereich des vierten Ausführungsbeispiels in Fig. 4;
- Fig. 6: einen Schnitt ähnlich Fig. 1 durch ein fünftes Ausführungsbeispiel;
- Fig. 7: einen Schnitt ähnlich Fig. 1 durch ein sechstes Ausführungsbeispiel und
- Fig. 8: eine Draufsicht ähnlich Fig.5 auf das sechste Ausführungsbeispiel.

Ein als Ganzes mit 10 bezeichnetes erstes Ausführungsbeispiel einer erfindungsgemäßen Unterflurvollauszugführung umfaßt im einzelnen eine Grundschiene 12, von welcher sich in Abstützrichtung 14, das heißt beim dargestellten Ausführungsbeispiel in vertikaler Richtung, ein Tragsteg 16 nach unten erstreckt, welcher seinerseits an einen Haltewinkel 18 angeformt ist, mit welchem die Grundschiene 12 stationär an einem Korpus 20 befestigbar ist.

Die Grundschiene 12 wird im wesentlichen C-förmig umgriffen von einer Mittelschiene 22, welche so angeordnet ist, daß der Tragsteg 16 durch die offene Seite 24 der Mittelschiene 22 hindurchgreift. Die Mittelschiene 22 ist ihrerseits über insgesamt vier erste Längsführungen 26, 28, 30 und 32 verschieblich an der Grundschiene 12 geführt, wobei die beiden Längsführungen 26 und 28 die oberen ersten Längsführungen bilden und die beiden Längsführungen 30 und 32 die unteren ersten Längsführungen.

Jede der ersten Längsführungen 26, 28, 30 und 32 weist eine an einer Außenseite der Grundschiene 12 angeordnete erste Bahn 26a, 28a, 30a und 32a sowie eine an einer der Grundschiene 12 zugewandten Innenseite der Mittelschiene 22 angeordnete erste Bahn 26b, 28b, 30b und 32b auf. Zwischen der Grundschiene 12 und der Mittelschiene 22 sind jeweils zwischen den ersten Bahnen 26a und 26b, 28a und 28b, 30a und 30b sowie 32a und 32b sich abwälzende Kugeln 26c, 28c, 30c und 32c angeordnet, die ihrerseits in einem Kugelkäfig 34 in bekannter Art und Weise geführt sind.

Die ersten Längsführungen 26, 28, 30 und 32 bilden vorzugsweise die Eckpunkte eines Rechtecks, welches symmetrisch zu einer parallel zur Abstützrichtung 14 verlaufenden Mittelebene 36 der Grundschiene 12 angeordnet ist, wobei jeweils die oberen ersten Längsführungen 26 und 28 sowie die unteren ersten Längsführungen 30 und 32 auf derselben Höhe bezüglich der Mittelebene 36 liegen.

Die Mittelschiene 22 ist ihrerseits von einer Endschiene 38 C-förmig umgriffen, wobei eine offene Seite 40 der Endschiene 38 ebenfalls von dem Tragsteg 16 der Grundschiene 12 durchsetzt ist.

Auch die Endschiene 38 ist ihrerseits an der Mittelschiene 22 durch zweite Längsführungen 42, 44 und 46 verschieblich geführt, wobei die zweite Längsführung 42 die obere zweite Längsführung bildet, während die zweiten Längsführungen 44 und 46 die unteren zweiten Längsführungen darstellen.

Die zweiten Längsführungen 42, 44 und 46 sind an den Eckpunkten eines Dreiecks angeordnet, welches ebenfalls zur Mittelebene 36 symmetrisch ist, wobei die unteren zweiten Längsführungen 44 und 46 jeweils denselben Abstand von der Mittelebene 36 aufweisen und auf derselben Höhe liegen, während die obere zweite Längsführung 42 von der Mittelebene 36 mittig durchsetzt ist.

Die zweiten Längsführungen 42, 44 und 46 umfassen auf einer Außenseite der Mittelschiene 22 angeordnete zweite Bahnen 42a, 44a und 46a sowie an einer Innenseite der Endschiene 38 angeordnete zweite Bahnen 42b, 44b und 46b, und zwischen den jeweiligen zweiten Bahnen 42a und 42b, 44a und 44b sowie 46a und 46b einer jeden der zweiten Längsführungen 42, 44 und 46 sind als Wälzkörper Kugeln 42c, 44c und 46c angeordnet, welche sich auf den zweiten Bahnen abwälzen.

Auch die Kugeln 42c, 44c und 46c sind ihrerseits in einem Kugelkäfig 48 in bekannter Art und Weise geführt.

Bei dem ersten Ausführungsbeispiel 10 ist die Mittelschiene 22 aus einem quer zur Mittelebene 36 verlaufenden Mittelschenkel 50 und zwei parallel zur Mittelebene 36 verlaufenden Seitenschenkeln 52 und 54 sowie sich an die Seitenschenkel 52 und 54 anschließenden Endschenkeln 56 und 58 gebildet, wobei die Endschenkel 56 und 58 ungefähr parallel zu den Seitenschenkeln 52 und 54 verlaufende Endbereiche 60 und 62 aufweisen.

Der Mittelschenkel 50 ist dabei so geformt, daß er äußere Durchbiegungen 64 und 66 aufweist, zwischen denen eine innere Durchbiegung 68 liegt, die eine entgegengesetzt zu den äußeren Durchbiegungen 64 und 66 liegende Krümmung aufweist. In den äußeren Durchbiegungen 64 und 66 liegen die ersten Bahnen 26b und 28b, während in der inneren Durchbiegung 68 die zweite Bahn 42a liegt.

Desgleichen schließt sich an die Seitenschenkel 52 und 54 am Übergang zu den Endschenkeln 56 und 58 jeweils eine äußere Durchbiegung 70 und 72 an, welche von einer inneren Durchbiegung 74 und 76 der Endschenkel 56 und 58 im Bereich des Übergangs zu den Endbereichen 60 und 62 gefolgt ist. In den äußeren Durchbiegungen 70 und 72 liegen dabei die ersten Bahnen 30b und 32b, während in den inneren Durchbiegungen 74 und 76 die zweiten Bahnen 44a und 46a liegen.

Vorzugsweise sind die zweiten Bahnen 44a und 46a so gelegt, daß sie einen geringeren Abstand von der Mittelebene 50 aufweisen als die ersten Bahnen 30b und 32b. Desgleichen liegt die zweite Bahn 42a zwischen den ersten Bahnen 26b und 28b.

Erfindungsgemäß sind beim ersten Ausführungsbeispiel 10 die Grundschiene 12, die Mittelschiene 22 und die Endschiene 38 aus einem gewalzten Stahlblechmaterial hergestellt, so daß bei allen Schienen die Materialdicke im wesentlichen konstant ist und die Bahnen für die Längsführungen 26 bis 32 sowie 42 bis 46 lediglich durch Formung der Schienen 12, 22 und 38 gebildet werden.

Vorzugsweise umfaßt die Endschiene 38 eine mittlere Durchbiegung 80, in welcher die zweite Bahn 42b angeordnet ist, sowie beiderseits derselben und symmetrisch zur Mittelebene 36 angeordnete äußere Durchbiegungen 82 und 84, welche in derselben Richtung wie die mittlere Durchbiegung 80 gekrümmt sind und eine Abstützung für einen zeichnerisch lediglich strichpunktiert dargestellten Auszug 86 bilden, mit welchem die Endschiene 38 verbindbar ist.

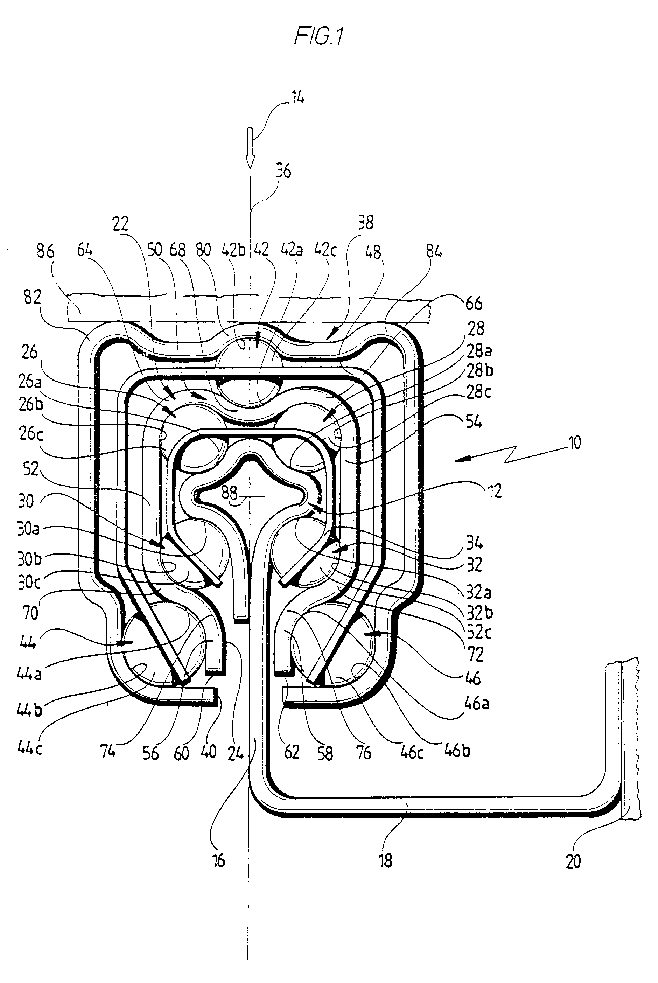

Die Endschiene 38 ist gegenüber der Mittelschiene 22 und die Mittelschiene 22 gegenüber der Grundschiene 12 in einer senkrecht auf der Zeichenebene der Fig. 1 stehenden Ausziehrichtung 88 verschiebbar, so daß das erste Ausführungsbeispiel einen Vollauszug mit gegebenenfalls möglichem Überauszug bildet.

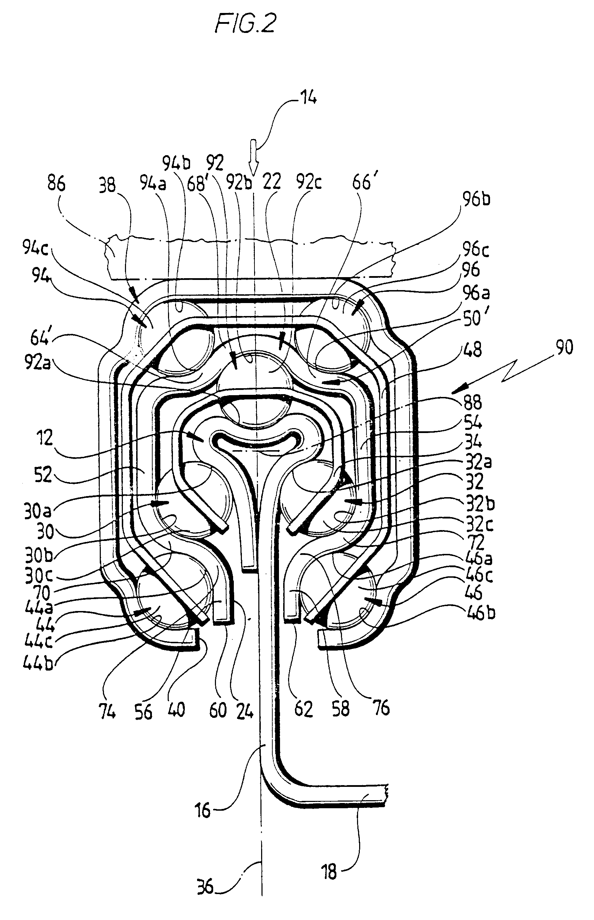

Ein zweites Ausführungsbeispiel, dargestellt in Fig. 2, und als Ganzes mit 90 bezeichnet, ist insoweit als identische Teile wie beim ersten Ausführungsbeispiel 10 Verwendung finden, mit denselben Bezugszeichen versehen. Bezüglich eer Beschreibung dieser Teile wird daher auf die Ausführungen zum ersten Ausführungsbeispiel verwiesen.

Im Gegensatz zum ersten Ausführungsbeispiel ist beim zweiten Ausführungsbeispiel anstelle der beiden oberen Längsführungen 26 und 28 lediglich eine obere erste Längsführung 92 vorgesehen, während anstelle der oberen zweiten Längsführung 42 zwei obere zweite Längsführungen 94 und 96 vorgesehen sind.

Damit ist auch der Mittelschenkel 50′ mit entgegengesetzt gekrümmten Durchbiegungen 64′, 66′ und 68′ versehen, welche beim zweiten Ausführungsbeispiel so angeordnet sind, daß in den äußeren Durchbiegungen 64′ und 66′ die zweiten Bahnen 94a und 96a liegen, während in der mittleren Durchbiegung 68′ die erste Bahn 92b liegt.

Damit liegen die zweiten Längsführungen 94, 96, 44 und 46 auf den Eckpunkten eines zur Mittelebene 36 symmetrischen Rechtecks, während die ersten Längsführungen 92, 30 und 32 an den Eckpunkten eines zur Mittelebene 36 symmetrischen Dreiecks liegen.

Bei einem als Ganzes mit 100 bezeichneten dritten Ausführungsbeispiel der erfindungsgemäßen Lösung sind mit dem ersten Ausführungsbeispiel 10 identische Teile mit denselben Bezugszeichen versehen, so daß bezüglich deren Beschreibung ebenfalls auf die Ausführungen zum ersten Ausführungsbeispiel verwiesen werden kann.

Im Gegensatz zum ersten Ausführungsbeispiel sind bei dem dritten Ausführungsbeispiel jeweils nur eine mittelere obere erste Längsführung 102 und eine mittlere obere zweite Längsführung 104 vorgesehen, wobei die Wälzkörper 102c und 104c derselben als Walzen ausgebildet sind, welche jeweils auf ersten Bahnen 102a und 102b sowie auf zweiten Bahnen 104a und 104b verlaufen, die nicht in Durchbiegungen liegen, sondern eben sind und vorzugsweise in quer zur Mittelebene 36 und parallel zur Ausziehrichtung 88 verlaufenden Ebenen liegen.

Damit ist auch der Mittelschenkel 50˝ mit der Mittelschiene 22 nicht mehr mit Durchbiegungen versehen, sondern verläuft gerade zwischen den Seitenschenkeln 52 und 54.

Bei einem als Ganzes mit 110 bezeichneten vierten Ausführungsbeispiel der erfindungsgemäßen Lösung sind die Teile, die mit dem ersten Ausführungsbeispiel 10 identisch sind mit denselben Bezugszeichen versehen, so daß bezüglich deren Beschreibung auf die Ausführungen zum ersten Ausführungsbeispiel verwiesen werden kann.

Im Gegehsatz zum ersten Ausführungsbeispiel 10 ist die obere zweite Längsführung 22 ersetzt durch zwei symmetrisch zur Mittelebene 36 angeordnete zweite Längsführungen 112 und 114, deren Wälzkörper 112c und 114c als Walzen ausgebildet sind. Damit erübrigt es sich auch, den Mittelschenkel 50‴ der Mittelschiene 22 mit einer mittleren Durchbiegung zu versehen. Vielmehr ist der Mittelschenkel 50‴ so ausgebildet, daß er ebene zweite Bahnen 112a und 114a für die Walzen 112c und 114c bildet.

Ferner ist zur Synchronisation der Bewegung der Endschiene und der Mittelschiene mittig zwischen den Längsführungen 112 und 114 in einem, insbesondere aus Fig. 5 zu ersehen, hinteren Endbereich der Mittelschiene 22 eine Synchrorolle 116 vorgesehen, welche sich einerseits auf einer Synchronbahn 116a auf der Grundschiene 12 und andererseits auf einer Synchronbahn 116b der Endschiene 38 abwälzt und in einer Ausnehmung 118 im hinteren Endbereich 120 der Mittelschiene 22 geführt ist, wobei die Ausnehmung 118 die Synchronrolle 116 sowohl quer zur Ausziehrichtung 88 als auch in Ausziehrichtung 88 führt. Somit bewirkt die sich beim Ausziehen der Endschiene 38 auf der Grundschiene 12 abwälzende Synchronrolle 116 eine definierte Verschiebung der Mittelschiene 22 um den halben Weg, den die Endschiene 38 relativ zur Grundschiene 12 zurücklegt, so daß sich die Mittelschiene 22 und die Endschiene 38 sychron miteinander bewegen.

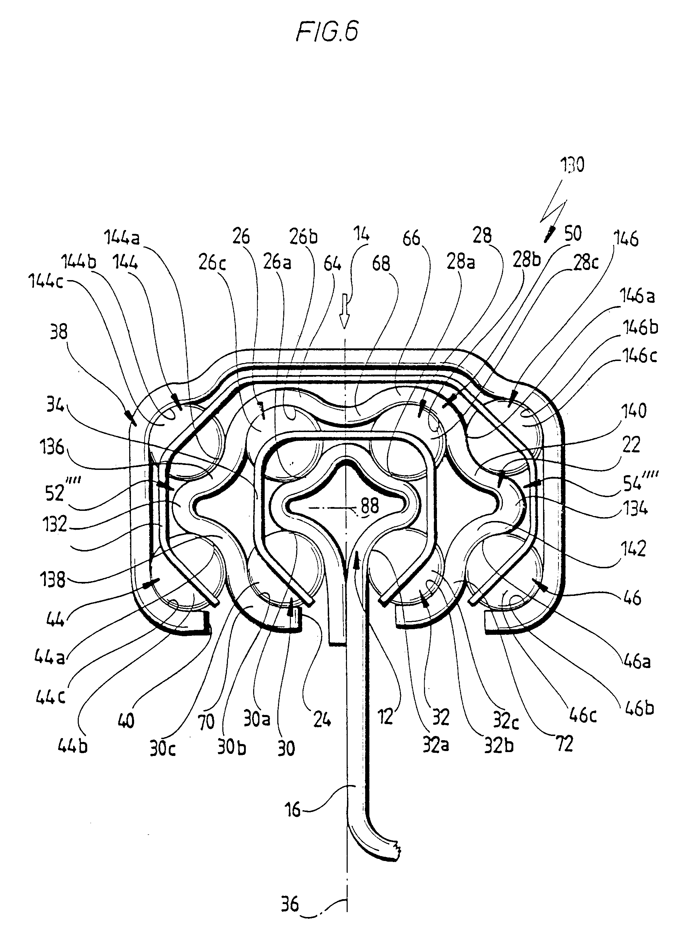

Bei einem fünften Ausführungsbeispiel, in Fig. 6 als Ganzes mit 130 bezeichnet, sind dieselben Teile, insoweit als sie mit denen des ersten Ausführungsbeispiels 10 identisch sind, mit denselben Bezugszeichen versehen.

Im Gegensatz zum ersten Ausführungsbeispiel sind die Seitenschenkel 52˝˝ und 54˝˝ mit seitlichen, von der Grundschiene 12 wegweisenden Ausbiegungen 132 und 134 versehen, so daß die Seitenschenkel 52˝˝ und 54˝˝ jeweils zwei übereinander angeordnete und in denselben Richtungen gekrümmte Durchbiegungen 136 und 138 sowie 140 und 142 bilden, in welchen zweite Bahnen 144a und 44a sowie 146a und 46a von zweiten Längsführungen 144, 44 und 146, 46 liegen, wobei die beiden Längsführungen 144 und 146 die beiden oberen zweiten Längsführungen bilden, während die Längsführungen 44 und 46 wie beim ersten Ausführungsbeispiel die beiden unteren Längsführungen bilden.

Die Längsführungen 144, 44, 146 und 46 liegen dabei in den Eckpunkten eines zur Mittelebene 36 symmetrischen Rechtecks, wobei vorzugsweise bei diesem Ausführungsbeispiel die zweiten Längsführungen 144 und 146 in im wesentlichen derselben Ebene wie die ersten Längsführungen 26 und 28 liegen und außerdem auch die unteren zweiten Längsführungen 44 und 46 in im wesentlichen derselben Höhe wie die ersten Längsführungen 30 und 32 liegen.

Die Mittelschiene 22 ist im Bereich ihres Mittelschenkels 50 ebenfalls mit den beiden äußeren Durchbiegungen 64 und 66 sowie der inneren Durchbiegung 68 versehen, so daß die Durchbiegung 136 und die äußere Durchbiegung 64 sowie die Durchbiegung 140 und die äußere Durchbiegung 66 jeweils mit entgegegesetzten Krümmungen aufeinanderfolgen und jeweils in diesen die ersten bzw. zweiten, an der Mittelschiene 22 angeordneten Bahnen liegen.

Desgleichen ist die Durchbiegung 138 gefolgt von der äußeren Durchbiegung 70 und die Durchbiegung 142 gefolgt von der Durchbiegung 72, welche ebenfalls aufeinanderfolgend angeordnet sind und entgegengesetzte Krümmungen aufweisen.

Im Gegensatz zum ersten Ausführungsbeispiel entfallen dabei allerdings die inneren Durchbiegungen 74 und 76 der Mittelschiene 22.

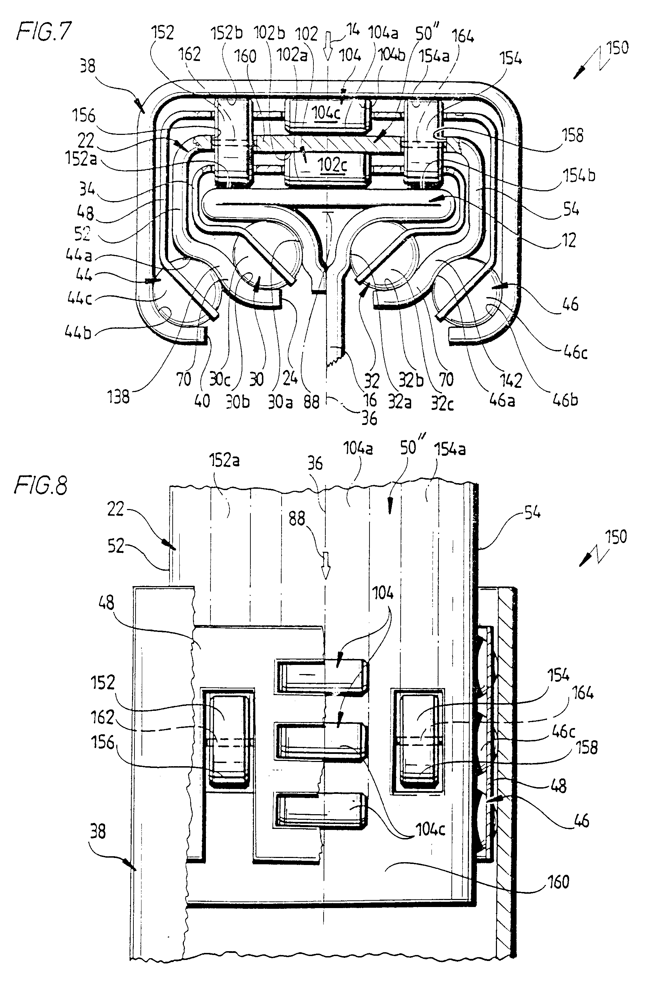

Bei einem sechsten Ausführungsbeispiel, in Fig. 7 als Ganzes mit 150 bezeichnet, sind dieselben Teile insoweit als sie mit denen des dritten Ausführungsbeispiels 100 identisch sind, mit denselben Bezugszeichen versehen, so daß bezüglich deren Beschreibung auf die Ausführungen zum dritten Ausführungsbeispiel 100 sowie, soweit dieses auf das erste Ausführungsbeispiel zurückbezogen ist, auf die Ausführungen zum ersten Ausführungsbeispiel verwiesen werden kann.

Im Gegensatz zum dritten Ausführungsbeispiel sind beiderseits der Längsführungen 102 und 104 mit Walzen 102c und 104c Synchronrollen 152 und 154 angeordnet, welche sich auf an der Grundschiene 12 angeordneten Synchronbahnen 152a und 154a sowie an der Endschiene 38 angeordneten Synchronbahnen 152b und 154b abwälzen.

Die Synchronrollen 152 und 154 sind außerdem, wie in Fig. 8 dargestellt, in Ausnehmungen 156 und 158 in einem hinteren Bereich 160 der Mittelschiene 22 geführt, wobei die Synchronrollen außerdem noch mit fest mit der Mittelschiene 22 verbundenen Achsen 162 und 164 drehbar an dieser gelagert sind.

Durch diese Achsen 162 und 164 wird die Mittelschiene 22 genau wie beim vierten Ausführungsbeispiel 110 um die halbe von der Endschiene 38 relativ zur Grundschiene 12 zurückgelegte Weglänge weiterbewegt, so daß die Mittelschiene 22 und die Endschiene 38 sich synchron zur Grundschiene 12 bewegen.

## Patentansprüche

1. Unterflurvollauszugführung für aus einem Korpus ausziehbare Auszüge, umfassend eine an dem Korpus (20) befestigbare stationäre Grundschiene (12), eine die Grundschiene im wesentlichen als C-Profil umgreifende Mittelschiene (22), die an der Grundschiene mittels mindestens zwei in einer senkrecht zur Ausziehrichtung und senkrecht zur Abstützrichtung (14) verlaufenden Querrichtung im Abstand voneinander angeordneten ersten Längsführungen (26, 28, 30, 32, 92, 102) verschieblich geführt ist, wobei letztere auf ersten Bahnen (26a, b; 28a, b; 30a, b; 32a, b; 92a, b; 102a, b) laufende erste Lagerkörper aufweisen und eine am Auszug befestigbare, die Mittelschiene im wesentlichen als C-Profil umgreifende Endschiene (38), welche an der Mittelschiene durch mindestens zwei in Querrichtung im Abstand voneinander angeordnete zweite Längsführungen (42, 44, 46, 94, 96, 104, 112, 114, 144, 146) verschieblich geführt ist, wobei letztere auf zweiten Bahnen (42a, b; 44a, b; 46a, b; 94a, b; 96a, b; 104a, b; 112a, b; 114a, b; 144a, b; 146a, b) laufende zweite Lagerkörper aufweisen,
**dadurch gekennzeichnet,**
daß die zweiten Längsführungen (42, 44, 46, 94, 96, 104, 112, 114, 144, 146) als zweite Lagerkörper frei laufende Wälzkörper (42c, 44c, 46c, 94c, 96c, 104c, 112c, 114c, 144c, 146c) aufweisen, die sich auf an einer Außenseite des C-Profils der Mittelschiene (22) vorgesehenen zweiten Bahnen (42a, 44a, 46a, 94a, 96a, 104a, 112a, 114a, 144a, 146a) und an einer Innenseite des C-Profils der Endschiene (38) vorgesehenen zweiten Bahnen (42b, 44b, 46b, 94b, 96b, 104b, 112b, 114b, 144b, 146b) abwälzen, daß die im Abstand voneinander angeordneten zweiten Längsführungen (44, 46) untere Längsführungen bilden und daß in Abstützrichtung (14) der Auszugführung über diesen unteren Längsführungen (44, 46) mindestens eine obere zweite Längsführung (42, 94, 96, 104, 112, 114, 144, 146) vorgesehen ist.

2. Auszugführung nach Anspruch 1, dadurch gekennzeichnet, daß das C-Profil der Mittelschiene (22) aus Material mit im wesentlichen konstanter Dicke ist.

3. Auszugführung nach einem der Ansprüche 1 oder 2, dadurch gekennzeichnet, daß die Mittelschiene (22) zumindest in einem die ersten und zweiten Bahnen tragenden Bereich (50, 56, 58) wellenartig aufeinanderfolgende, entgegengesetzt gekrümmte Durchbiegungen (64, 66, 68, 70, 72, 74, 76, 136, 138, 140, 142) aufweist, und die ersten und zweiten Bahnen jeweils in einer Durchbiegung (64, 66, 68, 70, 72, 76, 136, 138, 140, 142) liegen.

4. Auszugführung nach Anspruch 3, dadurch gekennzeichnet, daß die ersten Bahnen und die zweiten Bahnen in aufeinanderfolgenden Durchbiegungen (64, 66, 68; 70, 72, 74, 76; 136, 138; 64, 66; 140, 142, 70, 72) liegen.

5. Auszugführung nach einem der voranstehenden Ansprüche, dadurch gekennzeichnet, daß die zweiten Längsführungen (42, 44, 46, 94, 96, 104, 112, 114, 144, 146) symmetrisch zu einer zur Abstützrichtung (14) parallelen Mittelebene der Grundschiene (12) liegen.

6. Auszugführung nach einem der voranstehenden Ansprüche, dadurch gekennzeichnet, daß die ersten Längsführungen (26, 28, 30, 32, 92, 102) symmetrisch zu einer zur Abstützrichtung (14) parallelen Mittelebene (36) der Grundschiene (12) liegen.

7. Auszugführung nach einem der voranstehenden Ansprüche, dadurch gekennzeichnet, daß die ersten Längsführungen (26, 28, 30, 32, 92, 102) sich auf den ersten Bahnen (26a, b; 28a, b; 30a, b; 32a, b; 92a, b; 102a, b) abwälzende Wälzkörper (26c, 28c, 30c, 32c, 92c, 102c) aufweisen.

8. Auszugführung nach einem der voranstehenden Ansprüche, dadurch gekennzeichnet, daß die ersten Längsführungen (26, 28, 30, 32) an Eckpunkten eines senkrecht zur Ausziehrichtung stehenden Rechtecks angeordnet sind.

9. Auszugführung nach einem der Ansprüche 1 bis 7, dadurch gekennzeichnet, daß die ersten Längsführungen (92, 30, 32; 102, 30, 32) an Eckpunkten eines senkrecht zur Ausziehrichtung stehenden Dreiecks angeordnet sind.

10. Auszugführung nach einem der voranstehenden Ansprüche, dadurch gekennzeichnet, daß die zweiten Längsführungen (94, 96, 44, 46; 112, 114, 44, 46; 144, 146, 44, 46) an Eckpunkten eines senkrecht zur Ausziehrichtung (88) stehenden Rechtecks angeordnet sind.

11. Auszugführung nach einem der Ansprüche 1 bis 9, dadurch gekennzeichnet, daß die zweiten Längsführungen (42, 44, 46; 104, 44, 46) an Eckpunkten eines senkrecht zur Ausziehrichtung (88) stehenden Dreiecks angeordnet sind.

12. Auszugführung nach einem der voranstehenden Ansprüche, dadurch gekennzeichnet, daß die Mittelschiene (22) einen oberen in Querrichtung verlaufenden Mittelschenkel (50), zwei in Abstützrichtung (14) verlaufende Seitenschenkel (52, 54) und zwei im Anschluß an die Seitenschenkel (52, 54) aufeinanderzu eingezogene Endschenkel (56, 58) aufweist.

13. Auszugführung nach Anspruch 12, dadurch gekennzeichnet, daß die zweiten Bahnen (42a, 44a, 46a, 94a, 96a, 104a, 112a, 114a, 144a, 146a) an dem Mittelschenkel (50) und dem Endschenkel (56, 58) angeordnet sind.

14. Auszugführung nach Anspruch 12 oder 13, dadurch gekennzeichnet, daß die Endschenkel (56, 58) in ungefähr parallel zu den Seitenschenkeln (52, 54) ausgerichteten Endbereichen (60, 62) auslaufen.

15. Auszugführung nach einem der voranstehenden Ansprüche, dadurch gekennzeichnet, daß die obere zweite Längsführung (42, 94, 96, 104, 112, 114, 144, 146) oberhalb der ersten Längsführungen (26, 28, 30, 32, 92, 102) und die unteren zweiten Längsführungen (44, 46) unterhalb der ersten Längsführungen (26, 28, 30, 32, 102) angeordnet sind.

16. Auszugführung nach Anspruch 15, dadurch gekennzeichnet, daß die auf der Mittelschiene (22) liegenden zweiten Bahnen (42a, 44a, 46a, 94a, 96a, 104a, 112a, 114a) innerhalb einer maximalen Erstreckung der Mittelschiene in Querrichtung liegen.

17. Auszugführung nach einem der Ansprüche 1 bis 12, dadurch gekennzeichnet, daß die zweiten Bahnen (144a, 146a, 44a, 46a) an den Seitenschenkeln (52˝˝, 54˝˝) angeordnet sind.

18. Auszugführung nach Anspruch 17, dadurch gekennzeichnet, daß die zweiten Bahnen (144a, 146a, 44a, 46a) an einer seitlichen, von der Grundschiene (12) wegweisenden Ausbiegung (132, 134) der Seitenschenkel (52˝˝, 54˝˝) angeordnet sind.

19. Auszugführung nach einem der Ansprüche 17 oder 18, dadurch gekennzeichnet, daß die zweiten Bahnen (144a, b; 146a, b; 44a, b; 46a, b) im wesentlichen auf derselben Höhe wie die entsprechenden ersten Bahnen (26a, b; 28a, b; 30a, b; 32a b) liegen.

20. Auszugführung nach einem der voranstehenden Ansprüche, dadurch gekennzeichnet, daß die Grundschiene (12) einen parallel zur Abstützrichtung (14) verlaufenden Tragsteg (16) aufweist, welcher mit einem Haltewinkel (18) verbunden ist.

21. Auszugführung nach Anspruch 20, dadurch gekennzeichnet, daß die unteren zweiten Längsführungen (44, 46) den Tragsteg (16) zwischen sich einschließen.

22. Auszugführung nach einem der voranstehenden Ansprüche, dadurch gekennzeichnet, daß zwischen der Endschiene (38) und der Grundschiene (12) eine Synchronrolle (116, 152, 154) verläuft, welche in Ausziehrichtung (88) unverschieblich an der Mittelschiene (22) gelagert ist.

23. Auszugführung nach Anspruch 22, dadurch gekennzeichnet, daß die Synchronrolle (116, 152, 154) eine Ausnehmung (118, 156, 158) der Mittelschiene (22) durchgreift.

24. Auszugführung nach Anspruch 23, dadurch gekennzeichnet, daß die Synchronrolle (116) in der Ausnehmung (118) der Mittelschiene (22) gelagert ist.

25. Auszugführung nach einem der Ansprüche 22 oder 23, dadurch gekennzeichnet, daß die Synchronrolle (152, 154) um eine an der Mittelschiene (22) festgelegte Achse (162, 164) drehbar gelagert ist.

26. Auszugführung nach einem der voranstehenden Ansprüche, dadurch gekennzeichnet, daß die Vollauszugführung mit Überauszug aus dem Korpus (20) ausziehbar ist.

## Claims

1. Flush-mounted, fully extensible slide means for elements withdrawable from a housing, comprising a stationary base rail (12) attachable to the housing (20), a central rail (22) extending around the base rail essentially as a C-shaped profile, said central rail being displaceably guided on the base rail by means of at least two first longitudinal guideways (26, 28, 30, 32, 92, 102) arranged in spaced relation to one another in a transverse direction extending at right angles to the withdrawal direction and at right angles to the support direction (14), whereby said first longitudinal guideways have first bearing members running on first tracks (26a, b; 28a, b; 30a, b; 32a, b; 92a, b; 102a, b), and an end rail (38) attachable to the withdrawable element and extending around the central rail essentially as a C-shaped profile, said end rail being displaceably guided on the central rail by at least two second longitudinal guideways (42, 44, 46, 94, 96, 104, 112, 114, 144, 146) arranged in spaced relation to one another in transverse direction, whereby said second longitudinal guideways have second bearing members running on second tracks (42a, b; 44a, b; 46a, b; 94a, b; 96a, b; 104a, b; 112a, b; 114a, b; 144a, b; 146a, b;), characterized in that the second longitudinal guideways (42, 44, 46, 94, 96, 104, 112, 114, 144, 146) have freely running roller members (42c, 44c, 46c, 94c, 96c, 104c, 112c, 114c, 144c, 146c) as second bearing members, said roller members rolling along second tracks (42a, 44a, 46a, 94a, 96a, 104a, 112a, 114a, 144a, 146a) provided on an outer side of the C-shaped profile of the central rail (22) and second tracks (42b, 44b, 46b, 94b, 96b, 104b, 112b, 114b, 144b, 146b) provided on an inner side of the C-shaped profile of the end rail (38), that the second longitudinal guideways (44, 46) arranged in spaced relation to one another form lower longitudinal guideways and that at least one upper second longitudinal guideway (42, 94, 96, 104, 112, 114, 144, 146) is provided above these lower longitudinal guideways (44, 46) in support direction (14) of the extensible slide means.

2. Extensible slide means as defined in claim 1, characterized in that the C-shaped profile of the central rail (22) is made of material having an essentially constant thickness.

3. Extensible slide means as defined in either of claims 1 or 2, characterized in that at least in a region (50, 56, 58) bearing the first and second tracks the central rail (22) has bends (64, 66, 68, 70, 72, 74, 76, 136, 138, 140, 142) following one another in wavy configuration and curved in opposite directions, and the first and second tracks are each located in a bend (64, 66, 68, 70, 72, 76, 136, 138, 140, 142).

4. Extensible slide means as defined in claim 3, characterized in that the first tracks and the second tracks are located in consecutive bends (64, 66, 68; 70, 72, 74, 76; 136, 138; 64, 66; 140, 142, 70, 72).

5. Extensible slide means as defined in any of the preceding claims, characterized in that the second longitudinal guideways (42, 44, 46, 94, 96, 104, 112, 114, 144, 146) are symmetrical to a central plane of the base rail (12) extending parallel to the support direction (14).

6. Extensible slide means as defined in any of the preceding claims, characterized in that the first longitudinal guideways (26, 28, 30, 32, 92, 102) are symmetrical to a central plane (36) of the base rail (12) extending parallel to the support direction (14).

7. Extensible slide means as defined in any of the preceding claims, characterized in that the first longitudinal guideways (26, 28, 30, 32, 92, 102) have roller members (26c, 28c, 30c, 32c, 92c, 102c) rolling along the first tracks (26a, b; 28a, b; 30a, b; 32a, b; 92a, b; 102a, b).

8. Extensible slide means as defined in any of the preceding claims, characterized in that the first longitudinal guideways (26, 28, 30, 32) are arranged at corners of a rectangle perpendicular to the withdrawal direction.

9. Extensible slide means as defined in any of claims 1 to 7, characterized in that the first longitudinal guideways (92, 30, 32; 102, 30, 32) are arranged at corners of a triangle perpendicular to the withdrawal direction.

10. Extensible slide means as defined in any of the preceding claims, characterized in that the second longitudinal guideways (94, 96, 44, 46; 112, 114, 44, 46; 144, 146, 44, 46) are arranged at corners of a rectangle perpendicular to the withdrawal direction (88).

11. Extensible slide means as defined in any of claims 1 to 9, characterized in that the second longitudinal guideways (42, 44, 46; 104, 44, 46) are arranged at corners of a triangle perpendicular to the withdrawal direction (88).

12. Extensible slide means as defined in any of the preceding claims, characterized in that the central rail (22) has an upper central arm (50) extending in transverse direction, two lateral arms (52, 54) extending in support direction (14) and two end arms (56, 58) following the lateral arms (52, 54) and drawn in towards one another.

13. Extensible slide means as defined in claim 12, characterized in that the second tracks (42a, 44a, 46a, 94a, 96a, 104a, 112a, 114a, 144a, 146a) are arranged at the central arm (50) and the end arm (56, 58).

14. Extensible slide means as defined in claim 12 or 13, characterized in that the end arms (56, 58) terminate in end regions (60, 62) aligned approximately parallel to the lateral arms (52, 54).

15. Extensible slide means as defined in any of the preceding claims, characterized in that the upper second longitudinal guideway (42, 94, 96, 104, 112, 114, 144, 146) is arranged above the first longitudinal guideways (26, 28, 30, 32, 92, 102) and the lower second longitudinal guideways (44, 46) below the first longitudinal guideways (26, 28, 30, 32, 102).

16. Extensible slide means as defined in claim 15, characterized in that the second tracks (42a, 44a, 46a, 94a, 96a, 104a, 112a, 114a) located on the central rail (22) are located within a maximum extension of the central rail in transverse direction.

17. Extensible slide means as defined in any of claims 1 to 12, characterized in that the second tracks (144a, 146a, 44a, 46a) are arranged at the lateral arms (52'''', 54'''').

18. Extensible slide means as defined in claim 17, characterized in that the second tracks (144a, 146a, 44a, 46a) are arranged at a lateral outward bend (132, 134) of the lateral arms (52'''', 54'''') pointing away from the base rail (12).

19. Extensible slide means as defined in either of claims 17 or 18, characterized in that the second tracks (144a, b; 146a, b; 44a, b; 46a, b) are located essentially at the same level as the corresponding first tracks (26a, b; 28a, b; 30a, b; 32a, b).

20. Extensible slide means as defined in any of the preceding claims, characterized in that the base rail (12) has a supporting web (16) extending parallel to the support direction (14) and connected to an angle bracket (18).

21. Extensible slide means as defined in claim 20, characterized in that the lower second longitudinal guideways (44, 46) enclose the supporting web (16) between them.

22. Extensible slide means as defined in any of the preceding claims, characterized in that a synchronous roller (116, 152, 154) extends between the end rail (38) and the base rail (12), said roller being mounted on the central rail (22) so as to be non-displaceable in withdrawal direction (88).

23. Extensible slide means as defined in claim 22, characterized in that the synchronous roller (116, 152, 154) penetrates a recess (118, 156, 158) of the central rail (22).

24. Extensible slide means as defined in claim 23, characterized in that the synchronous roller (116) is mounted in the recess (118) of the central rail (22).

25. Extensible slide means as defined in either of claims 22 or 23, characterized in that the synchronous roller (152, 154) is mounted for rotation about an axle (162, 164) fixed in position at the central rail (22).

26. Extensible slide means as defined in any of the preceding claims, characterized in that the fully extensible slide means is withdrawable from the housing (20) with overextension.

## Revendications

1. Système de guidage à extension en applique inférieure pour des éléments extensibles à déployer hors d'un corps (20), comprenant un rail de base (12) stationnaire qui peut être fixé sur le corps, un rail médian (22) ayant sensiblement la forme d'un profil en C entourant le rail de base, ledit rail médian étant guidé en translation sur le rail de base au moyen d'au moins deux premiers guidages longitudinaux (26, 28, 30, 32, 92, 102) agencés à distance l'un de l'autre dans une direction transversale perpendiculaire à la direction d'extension et perpendiculaire à la direction d'appui (14), ces guidages présentant des premiers organes d'appui se déplaçant sur des premières voies (26a, b; 28a, b; 30a, b; 32a, b; 92a, b; 102a, b) et un rail terminal (38) fixable sur l'élément extensible, ayant sensiblement la forme d'un profil en C entourant le rail médian, ledit rail terminal étant guidé en déplacement sur le rail médian par au moins deux seconds guidages longitudinaux (42, 44, 46, 94, 96, 104, 112, 114, 144, 146) agencés à distance l'un de l'autre en direction transversale, ces guidages présentant des seconds organes d'appui se déplaçant sur des secondes voies (42a, b; 44a, b; 46a, b; 94a, b; 96a, b; 104a, b; 112a, b; 114a, b; 144a, b; 146a, b), caractérisé en ce que les seconds guidages longitudinaux (42, 44, 46, 94, 96, 104, 112, 114, 144, 146) présentent en tant que seconds organes d'appui des organes de roulement libres (42c, 44c, 46c, 94c, 96c, 104c, 112c, 114c, 144c, 146c) qui roulent sur des secondes voies (42a, 44a, 46a, 94a, 96a, 104a, 112a, 114a, 144a, 146a) prévues sur une face extérieure du profil en C du rail médian (22) et sur des secondes voies (42b, 44b, 46b, 94b, 96b, 104b, 112b, 114b, 144b, 146b) prévues sur une face intérieure du profil en C du rail terminal (38), en ce que les seconds guidages longitudinaux (44, 46) agencés à distance l'un de l'autre forment des guidages longitudinaux inférieurs et en ce qu'il est prévu au moins un second guidage longitudinal supérieur (42, 94, 96, 104, 112, 114, 144, 146) en direction d'appui (14) du système de guidage à extension au-dessus ces guidages longitudinaux inférieurs (44, 46).

2. Système de guidage selon la revendication 1, caractérisé en ce que le profil en C du rail médian (22) est en un matériau d'épaisseur sensiblement constante.

3. Système de guidage selon l'une quelconque des revendications 1 ou 2, caractérisé en ce que le rail médian (22) présente au moins dans une région (50, 56, 58) portant les premières et secondes voies des pliures (64, 66, 68, 70, 72, 74, 76, 136, 138, 140, 142) consécutives en forme d'ondulations à courbures opposées et en ce que les premières et secondes voies sont situées dans une pliure (64, 66, 68, 70, 72, 76, 136, 138, 140, 142) respective.

4. Système de guidage selon la revendication 3, caractérisé en ce que les premières voies et les secondes voies sont situées dans des pliures consécutives (64, 66, 68; 70, 72, 74, 76; 136, 138; 64, 66; 140, 142, 70, 72).

5. Système de guidage selon l'une quelconque des revendications précédentes, caractérisé en ce que les seconds guidages longitudinaux (42, 44, 46, 94, 96, 104, 112, 114, 144, 146) sont symétriques par rapport à un plan médian du rail de base (12), parallèle à la direction d'appui (14).

6. Système de guidage selon l'une quelconque des revendications précédentes, caractérisé en ce que les premiers guidages longitudinaux (26, 28, 30, 32, 92, 102) sont symétriques par rapport à un plan médian (36) du rail de base (12), parallèle à la direction d'appui (14).

7. Système de guidage selon l'une quelconque des revendications précédentes, caractérisé en ce que les premiers guidages longitudinaux (26, 28, 30, 32, 92, 102) présentent des organes de roulement (26c, 28c, 30c, 32c, 92c, 102c) roulant sur les premières voies (26a, b; 28a, b; 30a, b; 32a, b; 92a, b; 102a, b).

8. Système de guidage selon l'une quelconque des revendications précédentes, caractérisé en ce que les premiers guidages longitudinaux (26, 28, 30, 32) sont agencés aux coins d'un rectangle perpendiculaire à la direction d'extension.

9. Système de guidage selon l'une quelconque des revendications 1 à 7, caractérisé en ce que les premiers guidages longitudinaux (92, 30, 32; 102, 30, 32) sont agencés aux coins d'un triangle perpendiculaire à la direction d'extension.

10. Système de guidage selon l'une quelconque des revendications précédentes, caractérisé en ce que les seconds guidages longitudinaux (94, 96, 44, 46; 112, 114, 44, 46; 144, 146, 44, 46) sont agencés aux coins d'un rectangle perpendiculaire à la direction d'extension (88).

11. Système de guidage selon l'une quelconque des revendications 1 à 9, caractérisé en ce que les seconds guidages longitudinaux (42, 44, 46; 104, 44, 46) sont agencés aux coins d'un triangle perpendiculaire à la direction d'extension (88).

12. Système de guidage selon l'une quelconque des revendications précédentes, caractérisé en ce que le rail médian (22) présente une branche médiane supérieure (50) s'étendant en direction transversale, deux branches latérales (52, 54) s'étendant en direction d'appui (14) et deux branches d'extrémité (56, 58) raccordées aux branches latérales (52, 54) et convergentes l'une vers l'autre.

13. Système de guidage selon la revendication 12, caractérisé en ce que les secondes voies (42a, 44a, 46a, 94a, 96a, 104a, 112a, 114a, 144a, 146a) sont agencées sur la branche médiane (50) et sur la branche d'extrémité (56, 58).

14. Système de guidage selon la revendication 12 ou 13, caractérisé en ce que les branches d'extrémité (56, 58) se terminent par des régions d'extrémité (60, 62) dirigées à peu près parallèlement aux branches latérales (52, 54).

15. Système de guidage selon l'une quelconque des revendications précédentes, caractérisé en ce que le second guidage longitudinal supérieur (42, 94, 96, 104, 112, 114, 144, 146) est agencé au-dessus des premiers guidages longitudinaux (26, 28, 30, 32, 92, 102) et en ce que les seconds guidages longitudinaux inférieurs (44, 46) sont agencés au-dessous des premiers guidages longitudinaux (26, 28, 30, 32, 102).

16. Système de guidage selon la revendication 15, caractérisé en ce que les secondes voies (42a, 44a, 46a, 94a, 96a, 104a, 112a, 114a) situées sur le rail médian (22) sont disposées à l'intérieur d'une étendue maximale du rail médian en direction transversale.

17. Système de guidage selon l'une quelconque des revendications 1 à 12, caractérisé en ce que les secondes voies (144a, 146a, 44a, 46a) sont agencées sur les branches latérales (52'''', 54'''').

18. Système de guidage selon la revendication 17, caractérisé en ce que les secondes voies (144a, 146a, 44a, 46a) sont agencées sur une courbure latérale (132, 134) des branches latérales (52'''', 54'''') s'éloignant du rail de base (12).

19. Système de guidage selon l'une quelconque des revendications 17 ou 18, caractérisé en ce que les secondes voies (144a, b; 146a, b ; 44a, b; 46a, b) sont situées sensiblement à la même hauteur que les premières voies (26a, b; 28a, b; 30a, b; 32a, b) correspondantes.

20. Système de guidage selon l'une quelconque des revendications précédentes, caractérisé en ce que le rail de base (12) présente une barre de support (16) parallèle à la direction d'appui (14), laquelle est reliée à une cornière de retenue (18).

21. Système de guidage selon la revendication 20, caractérisé en ce que les seconds guidages longitudinaux inférieurs (44, 46) enferment la barre de support (16) entre eux.

22. Système de guidage selon l'une quelconque des revendications précédentes, caractérisé en ce qu'une poulie de synchronisation (116, 152, 154) s'étend entre le rail terminal (38) et le rail de base (12), ladite poulie étant montée indéplaçable en direction d'extension (88) sur le rail médian (22).

23. Système de guidage selon la revendication 22, caractérisé en ce que la poulie de synchronisation (116, 152, 154) traverse un évidement (118, 156, 158) du rail médian (22).

24. Système de guidage selon la revendication 23, caractérisé en ce que la poulie de synchronisation (116) est montée dans l'évidement (118) du rail médian (22).

25. Système de guidage selon l'une quelconque des revendications 22 ou 23, caractérisé en ce que la poulie de synchronisation (152, 154) est montée en rotation autour d'un axe (162, 164) fixé sur le rail médian (22).

26. Système de guidage selon l'une quelconque des revendications précédentes, caractérisé en ce que le système de guidage à extension peut être déployé en surextension hors du corps (20).
